(19) **Europäisches Patentamt / European Patent Office / Office européen des brevets**

(11) **EP 4 259 342 B1**

(12) **EUROPEAN PATENT SPECIFICATION**

(45) Date of publication and mention of the grant of the patent:
**21.01.2026 Bulletin 2026/04**

(21) Application number: **21811498.1**

(22) Date of filing: **11.11.2021**

(51) International Patent Classification (IPC):
**B05C 5/02** *(2006.01)*     **B05C 11/10** *(2006.01)*
**B29C 48/255** *(2019.01)*     **B29C 48/31** *(2019.01)*
**B29C 48/92** *(2019.01)*

(52) Cooperative Patent Classification (CPC):
**B05C 5/0262; B05C 11/1005; B29C 48/2556;**
**B29C 48/313; B29C 48/92;** B29C 2948/92152;
B29C 2948/92447; B29C 2948/92647;
B29C 2948/92942

(86) International application number:
**PCT/IB2021/060465**

(87) International publication number:
**WO 2022/123355 (16.06.2022 Gazette 2022/24)**

(54) **SLOT DIE POSITION ADJUSTMENT**

SCHLITZDÜSENPOSITIONSEINSTELLUNG

RÉGLAGE DE POSITION DE FILIÈRE À FENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2020 US 202063122996 P**

(43) Date of publication of application:
**18.10.2023 Bulletin 2023/42**

(73) Proprietor: **3M Innovative Properties Company**
**Saint Paul, Minnesota 55133-3427 (US)**

(72) Inventors:
• **SECOR, Robert B.**
  **Saint Paul, Minnesota 55133-3427 (US)**
• **YAPEL, Robert A.**
  **Saint Paul, Minnesota 55133-3427 (US)**
• **GALASSI, Nicholas F.**
  **Saint Paul, Minnesota 55133-3427 (US)**

• **LOUKUSA, Pentti K.**
  **Saint Paul, Minnesota 55133-3427 (US)**
• **WILHELM, Justin W.**
  **Saint Paul, Minnesota 55133-3427 (US)**
• **KOSTUCH, Gregory D.**
  **Saint Paul, Minnesota 55133-3427 (US)**
• **REHKAMP, Brandon A.**
  **Saint Paul, Minnesota 55133-3427 (US)**
• **THOMAS, Paul C.**
  **Saint Paul, Minnesota 55133-3427 (US)**

(74) Representative: **Vossius & Partner**
**Patentanwälte Rechtsanwälte mbB**
**Siebertstraße 4**
**81675 München (DE)**

(56) References cited:
**EP-A1- 2 718 086     EP-A2- 0 357 071**
**EP-A2- 1 987 942     EP-B1- 2 718 086**
**US-A- 5 770 129**

**Description**

Field of the Invention

The invention relates to slot dies, along with assemblies, systems, and methods thereof.

Background

Generally, slot dies include die lips that form an applicator slot. The width of the applicator slot can extend along the width of a moving web or the width of a roller that receives an extrudate, such as a film. As used herein, with respect to slot dies and components of slot dies, "a width" refers to the cross-web (or cross-roller) dimension of a slot die and its components. In this regard, an applicator slot of a slot die extends along the width of the slot die.

Slot dies are commonly used to form extrusions and coatings. As an example, slot dies are used in slot die coatings to apply a liquid material to a moving flexible substrate or "web." There are many variations in techniques for slot die coatings. As one example, coating materials can be at room temperature or a controlled temperature. When a coating material temperature is elevated to ensure that the coating material is melted or liquefied for processing, this is often referred to as "hot melt" coating. In other examples, a coating material can include solvent diluents. Solvents can be water, organic solvents, or any suitable fluid that dissolves or disperses components of a coating. Solvents are typically removed in subsequent processing such as by drying. A coating can include single or multiple layers, and some slot dies may be used to apply multiple layers simultaneously. A coating can be a continuous coating across the width of the die or instead be comprised of strips, with each strip extending across only a portion of the width of the die and being spatially separated from adjacent strips.

Slot dies can also be used to form extruded films, including thin-film extrudates. In some examples, such extrudates can be coatings applied to a web substrate, a process which may be referred to as extrusion coating. In other examples, the extrudate can form a film or web directly. An extruded film might be subsequently processed by length orienting or tentering operations. As with coatings, the extrudate might comprise a single layer or multiple layers.

The thickness of an extrudate, such as a film or coating, is dependent upon, among other factors, the flow rate of the extrudate through the slot die. In one example, a slot die can include an adjustable choker bar within the flow path that can be used to locally adjust the flow rate of the extrudate through the slot die to provide a desired thickness profile. A slot die can also include a flexible die lip that can be used to locally adjust the height of the applicator slot itself to control the flow rate of the extrudate from the applicator slot to provide a desired thickness profile.

A slot die may include a plurality of actuators spaced along the width of the applicator slot in order to provide a desired thickness profile for an extrudate. For example, each actuator can be configured to provide a local positional adjustment of a choker bar or flexible die lip. During the course of an extrusion process using the slot die, the cross-web profile of an extrudate can be measured. Each actuator can then be individually adjusted to provide a desired thickness profile, such as a uniform thickness, for the extrudate across the width of the applicator slot.

Slot dies of the prior art known from documents EP 1 987 942 A2 or EP 2 718 086 A1.

Summary

Described herein are slot die adjustment methods and systems that apply a matrix-based computational model for predictive and continuous control of actuator positions along the applicator slot. The provided methods are based on pressure deflection compensation, matrix overlap, and exponent generalization, and matrix storage methods to arrive at a desired coating thickness profile. These methods can include actuator interactions through the flow field as well as non-linear behavior in a single algorithm. These methods, individually and in combination, enable substantial enhancements in the iterative control of an automated slot die profile control system.

In a first aspect, a method of adjusting a slot die is provided, the slot die comprising: an applicator slot extending along a width of the slot die, wherein the applicator slot is in fluid communication with a fluid flow path through the slot die, at least one of a group consisting of: a choker bar and flexible die lip, and a plurality of actuators spaced along the width of the slot die, each actuator operatively coupled to the choker bar or flexible die lip to adjust a height of a fluid flow path at its respective location to provide a local adjustment of fluid flow through the applicator slot. The method comprises: measuring thickness values of an extrudate provided from the applicator slot; mapping the thickness values to a corresponding position along the width of the slot die; executing a data compression of the extrudate thickness values to obtain a residual matrix representing the deviation of the measured thickness values from desired thickness values; and adjusting the position of one or more of the plurality of actuators based on the residual matrix to obtain a corrected shape for the choker bar or flexible die lip.

In a second aspect, a process for making an extruded article is provided, the process comprising: adjusting a slot die according to the aforementioned method; and extruding through the applicator slot of the adjusted slot die an extrudate to obtain the extruded article.

In a third aspect, a system is provided, comprising: a slot die including an applicator slot extending along a width of the slot die, wherein the applicator slot is in fluid communication with a fluid flow path through the slot die, at least one of a group consisting of: a choker bar and a flexible die lip, and a plurality of actuators spaced along the width of the slot die, each actuator operatively coupled to the choker bar or flexible die lip to adjust a height of the fluid flow path at its respective location to provide a local adjustment of fluid flow through the applicator slot; and a controller configured to receive thickness values of an extrudate provided from the applicator slot, map the thickness values to a corresponding position along the width of the slot die, execute a data compression of the extrudate thickness values to obtain a residual matrix representing the deviation of the measured thickness values from desired thickness values; and adjust a position of one or more of the plurality of actuators based on the residual matrix to obtain a corrected shape for the choker bar or flexible die lip.

Brief Description of the Drawings

FIG. 1 illustrates an exemplary slot die in operation, the slot die including a choker bar with a plurality of actuators, each actuator operable to adjust a height of the fluid flow path at its location.

FIG. 2 is a top surface view of the slot die of FIG. 1.

FIG. 3 illustrates an actuator assembly including a position sensor and a controller.

FIG. 4 is a schematic showing an exemplary slot die adjustment process.

FIG. 5 is a plot showing predicted flow sensitivity data for an exemplary slot die.

FIG. 6 shows a Ricker wavelet used to model thickness sensitivity to actuator movement.

FIG. 7 shows the correction of a slot die profile achieved using a Ricker wavelet transform.

FIGS. 7A-7C shows calculations of the thickness sensitivity from a series of slot height changes, as used to determine the most physically relevant exponent E.

FIG. 8 shows a calculated slot height profile absent any pressure deflection effects.

FIG. 9 shows a calculated slot height pressure-deflection correction profile.

FIG. 10 shows a calculated slot height profile of a pressure-corrected slot.

FIG. 11 shows a slot height profile showing the calculated flexing of the die lip as measured from its neutral position.

FIG. 12 shows a calculated slot height and coating thickness profile obtained using an exemplary die slot adjustment process.

Repeated use of reference characters in the specification and drawings is intended to represent the same or analogous features or elements of the disclosure. It should be understood that numerous other modifications and embodiments can be devised by those skilled in the art, which fall within the scope of the invention, which is defined by the appended claims. The figures may not be drawn to scale.

Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises", and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described relating to the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

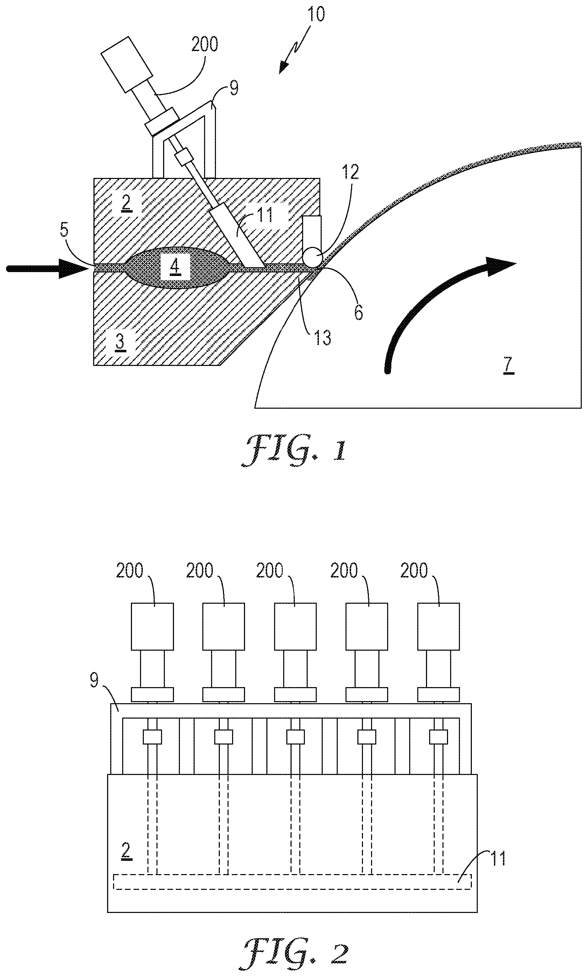

FIGS. 1 and 2 illustrate a slot die 10. Slot die 10 includes an upper die block 2 and a lower die block 3. Upper die block 2 combines with lower die block 3 to form a fluid flow path through slot die 10. The fluid flow path includes entry 5, die cavity 4 and applicator slot 6. Applicator slot 6 is between rotary rod 12, which is mounted to upper die block 2, and die lip 13 of lower die block 3. Because slot die 10 includes rotary rod 12 at its applicator slot, slot die 10 may be referred to as a rotary rod die.

Slot die 10 includes a choker bar 11 that extends across the width of the fluid flow path within slot die 10. As one example, the width of the fluid flow path within slot die 10 at choker bar 11 may be approximately the same as the width of applicator slot 6 such that choker bar 11 extends along the width of applicator slot 6. Actuator assemblies 200 are mounted on a common mounting bracket 9 and spaced along the width of slot die 10. In some examples, mounting bracket 9 may be segmented, e.g., mounting bracket 9 may include separate structures for each actuator assembly 200. Each actuator assembly 200 is operable to adjust a height of the fluid flow path at its respective location along the width of slot die 10 to provide a local adjustment of fluid flow through applicator slot 6 by changing the position of choker bar 11 within the fluid flow path of the extrudate within slot die 10.

During operation of slot die 10, an extrudate enters slot die 10 at fluid flow path entry 5 and continues through the fluid flow path of slot die 10, including die cavity 4 until the extrudate exits through applicator slot 6 and is applied to moving roller 7. In some embodiments, the extrudate can be applied to a moving web (not shown). In other embodiments, the extrudate can be applied directly to roller 7. Optionally, the extrudate and web can be conveyed through a series of rollers to allow the extrudate to cool.

One or more additional processes may be performed to the extrudate downstream of roller 7. Such processes include, but are not limited to, stretching, coating, texturing, printing, cutting, rolling, and laminating. In some processes, production release liners can be removed and release liners added, or one or more additional layers (such as a laminated transfer tape) can be added. Curing steps could also occur, and can be implemented by exposure to e-beam, heat, or actinic radiation, such as ultraviolet (UV) light.

As shown in FIG. 2, slot die 10 includes a set of actuator assemblies 200 mounted on a common mounting bracket 9. Five actuator assemblies 200 are shown, but different numbers of actuator assemblies are also possible. Each actuator assembly 200 is attached to, or otherwise engaged with, choker bar 11 and actuator assemblies 200 are spaced along a width of choker bar 11. Each of the actuators is operable to control the height of the fluid flow path at its location by providing a local adjustment of the position of choker bar 11 within the fluid flow path within slot die 10.

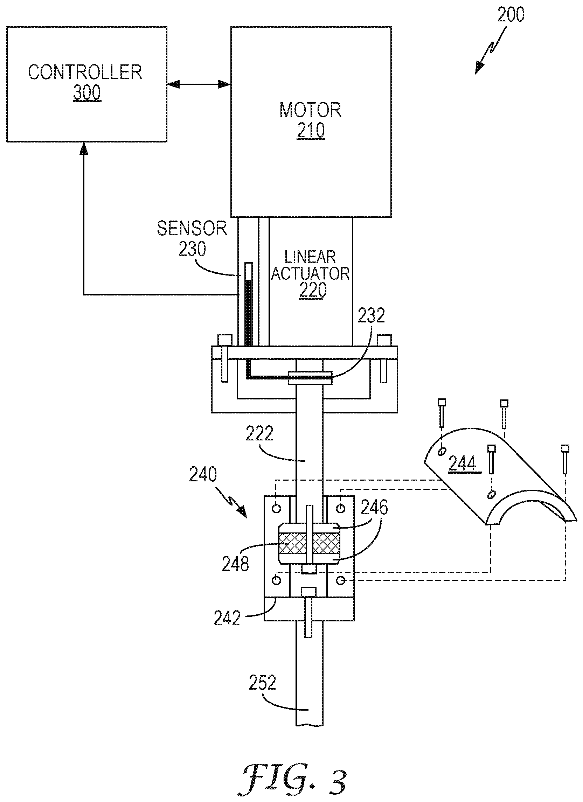

As will be discussed later with respect to FIG. 3, each of actuator assemblies 200 can include a motor that drives a linear actuator. Each of actuator assemblies 200 can also include a precision sensor, such as a linear variable differential transformer (LVDT) or a linear encoder, that detects position movements of the output shaft of the linear actuator. The output shafts of linear actuator assemblies 200 are spaced along the width of choker bar 11 such that each linear actuator assembly 200 is operable to adjust the local position of the choker bar. As discussed in further detail below, the positions of each linear actuator are individually selectable to provide a desired cross-web profile of an extrudate. In addition, the positions of linear actuator assemblies 200 can be precisely coordinated to provide a desired die cavity pressure within die cavity 4 during the operation of slot die 10 by adjusting the overall cross-sectional area of the fluid flow path adjacent to the choker bar 11 within slot die 10. In other examples, the positions of each actuator assembly 200 may be actively controlled to create an extrudate with patterned features, such as repeating or random patterned features. As referred to herein, references to the position of an actuator or actuator assembly are intended to more specifically refer to the relative positioning of the actuator output shaft.

Variants of slot die 10 are also possible, in which the actuator assemblies are engaged to a flexible die lip or rotary rod instead of a choker bar. Actuator assemblies may also be present to adjust the cross-sectional area of the fluid flow path from opposing sides of the applicator slot. In these embodiments, various combinations are possible; for instance, a rotary rod die could be configured with both a choker bar and flexible die lip, each being capable of precise adjustment through a plurality of actuators spaced along the width of the rotary rod die.

FIG. 3 illustrates an assembly including an individual actuator assembly 200, zero-backlash coupler 240 and controller 300. As shown in FIGS. 1 and 2, actuator assembly 200 may be used in a slot die to provide a local adjustment of a fluid flow path of the slot die, e.g., by adjusting the height of a fluid flow path within the slot die as with slot die 10.

Actuator assembly 200 includes motor 210, linear actuator 220, which is coupled to motor 210, and position sensor 230. As one example, motor 210 may be a stepper motor. The output shaft (not shown) of motor 210 is mechanically coupled to linear actuator 220. Sensor 230 senses the position of linear actuator 220. For example, sensor 230 may be a LVDT sensor or a linear encoder. Sensor 230 is secured to output shaft 222 of linear actuator 220 with clamp 232 and precisely measures the relative position of output shaft 222 of linear actuator 220. In other examples, the sensor 230 might measure the zero-backlash coupler 240, die actuator linkage 252, flexible die lip 32, rotary rod 22, or choker bar 11. Actuator assemblies that are suitable for use as actuator assemblies 200 are available from Honeywell International Incorporated of Morristown, New Jersey.

Controller 300 is commonly a dedicated computer, and receives position inputs from both motor 210 and sensor 230. For example, motor 210 may be a stepper motor and may provide an indication of the number of "steps" the stepper motor has taken from a known reference position of the stepper motor. Sensor 230 may provide more precise position information to controller 300 than that provided by the motor 210. Controller 300 provides instructions to motor 210 to drive output shaft 222 of actuator 220 to a preselected position. For example, controller 300 may monitor the position output shaft 222 of actuator 220 with sensor 230 while operating motor 210 in order to position output shaft 222 of actuator 220 according to a preselected position. In some examples, controller 300 may control a set of actuator assemblies 200, either simultaneously or sequentially. For example, controller 300 can control each of the actuator assemblies 200 in slot die 10 shown in FIG. 2.

In slot die 10, output shaft 222 of actuator 220 can be advantageously connected to die actuator linkage 252 by zero-backlash coupler 240. Zero-backlash coupler 240, in this example, includes two halves that screw together, bottom half 242 and top half 244. Bottom half 242 is directly attached to die actuator linkage 252 with a screw. In addition, zero-backlash coupler 240 includes a stacked protrusion assembly that bolts onto the end of output shaft 222 of actuator 220. The stacked protrusion assembly includes two metallic discs 246 surrounding an insulative disc 248. As one example, insulative disc 248 may comprise a ceramic material. Bottom half 242 and top half 244 combine to encircle the stacked protrusion assembly, including metallic discs 246 and insulative disc 248, bolted onto the end of output shaft 222 of actuator 220. Once top half 244 is securely screwed to bottom half 242, output shaft 222 of actuator 220 is effectively connected to zero-backlash coupler 240 and die actuator linkage 252.

Zero-backlash coupler 240 functions to thermally isolate actuator assembly 200 from the slot die. In particular, insulative disc 248 significantly limits the metal-to-metal contact path between output shaft 222 of actuator 220 and die actuator linkage 252. This helps protect actuator assembly 200 from the damaging heat of a slot die. For example, slot dies commonly operate at temperatures in excess of 300°F (149°C), whereas the components of actuator assembly 200, including motor 210 and sensor 230 may experience limited functionality or even permanent damage when subjected to temperatures to in excess of 130°F (54°C). For this reason, zero-backlash coupler 240 may function to keep the temperature of actuator assembly 200 at 130°F (54°C) or less. In some examples, the metallic discs 246 can be formed from nonmetallic materials such that there is no metal-to-metal contact between output shaft 222 of actuator 220 and die actuator linkage 252. Such features can further thermally isolate actuator assembly 200 from the slot die housing.

While not fully articulated here, actuator assembly 200 can include further options and advantages, as described elsewhere in U.S. Patent Nos. 9,044,894 (Loukusa, et al.), 9,216,535 (Trice et al.) 9,579,684 (Yapel, et al.), and 9,744,708 (Loukusa et al.).

Alternative actuator mechanisms are possible. In other embodiments, the actuator mechanisms include one or more of the following: thermally adjustable bolts, differential bolts, piezo-electric actuators, pneumatic actuators; and/or hydraulic actuators. In one embodiment, the actuator mechanism includes thermally-adjustable bolts and the technique for retrofitting a slot die with thermally-adjustable bolts may include evaluating the cross-web profile of the extrudate after it exits the applicator slot and adjusting the relative position of one or more of the actuator mechanisms with its respective thermally-adjustable bolt such that the cross-web profile of the extrudate after it exits the applicator slot more closely conforms to a preselected cross-web profile.

In one exemplary actuator mechanism, the applicator slot can be adjusted by applying a pressing load or tensile load to a flexible die lip using a lever supported by a rotating shaft as a fulcrum, along with an operating rod displaced in an axial direction by the body of the slot die. Rotational force of the lever can be converted into a force along an axial direction of the operating rod, and the force in the axial direction becomes a pressing load or a tensile load exerted on the flexible die lip. The lever directly can apply a force to the operating rod at the point of action of the lever.

In another example, thermally adjustable bolts automatically regulate the applicator slot using a plurality of adjusting pins, coupled to respective thermoelements disposed on a flexible die lip. The thermoelements can be controllable by the controller in to adjust the applicator slot through the action of mechanical force applied to the flexible die lip by the corresponding adjusting pin through expansion or contraction of the thermoelements. As a further option, the actuator mechanism can include providing at least two adjusting pins and/or thermoelements that are simultaneously adjusted.

Further aspects of the foregoing, along with other variants, are described in U.S. Patent No. 9,700,911 (Nakano) and PCT Patent Publication No. WO 2019/219724 (Colell et al.).

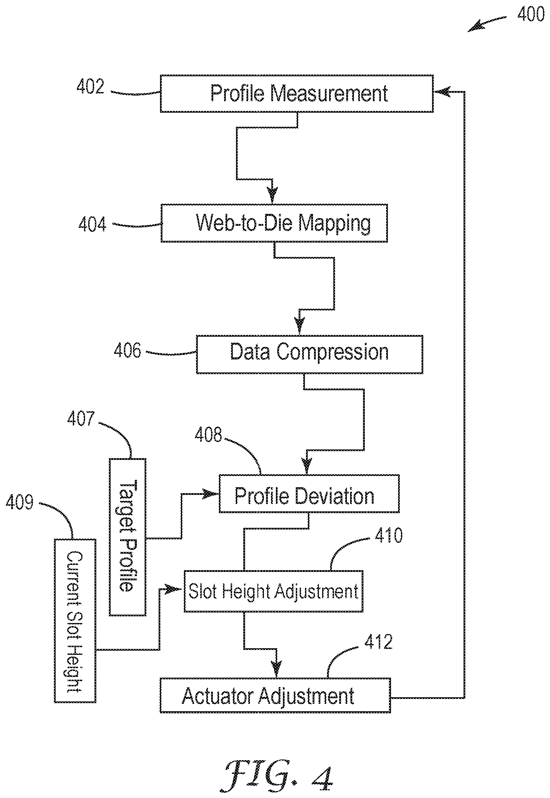

FIG. 4 is a flowchart illustrating an exemplary workflow 400 for progressively adjusting the position of each actuator in a plurality of actuators of a slot die in an extrusion process to achieve a target extrudate thickness profile. While not intended to be limiting, the workflow 400 is described with respect to slot die 10 (FIGS. 1 and 2), actuator assembly 200 (FIG. 3) and controller 300 (FIG. 3) during an extrusion operation. In various examples, the techniques described can also be utilized for strip coating, a film slot die, a multilayer slot die, a hot melt extrusion coating die, a drop die, a rotary rod die, an adhesive slot die, a solvent coating slot die, a water-based coating die, a slot fed knife die, an extrusion replication die, a vacuum contact die, or other slot die.

An initial step in workflow 400 is providing a Profile Measurement (block 402) on the extrudate obtained from the applicator slot of the slot die. Known measurement techniques include use of a beta gauge. A beta gauge measures the normalized mass of a web by transmitting through the web radiation emitted from a radioisotope source (e.g., based on promethium, krypton, or strontium) and detecting the resulting attenuation of beta particles. The measurement footprint of a beta gauge is small, so profile measurements are made at various locations across the width of the web and tracked over time to account for time differences amongst measurements taken along the web. The complete profile measurement can require the averaging of several scans (commonly, 6 scans or more) to have statistical significance.

Alternative gauging methods are also available, including those based on UV fluorescence, direct thickness measurement such as laser triangulation, reflective methods such as gamma backscattering, and capacitance-based caliper sensing. Some of these methods are capable of capturing a web thickness profile over the entire width of the web at one time. It was determined that applying the workflow 400 described herein while measuring the coating thickness along its entire width at one time can provide a 4-fold to 12-fold improvement in cycle time compared to a workflow that uses a conventional scan-based gauging method.

Data from the Profile Measurement (block 402) often includes a large number of discrete measurements for each cross-web scan. To manage this, the measurement system can process the raw discrete measurements into a smaller number of data values, essentially utilizing a form of cross-web and down-web averaging as defined by Equation 1 below:

$$M_i = \frac{1}{\Delta x \Delta z} \sum_{jk} t_{jk} \qquad \text{(Equation 1)}$$

where the coarse-grained measured values, $M_i$, represent an average value over a certain cross-web zone, $\Delta x$, and a down-web distance $\Delta z$, $t$ represents a given thickness measurement within that cross-web zone, $\Delta x$, and a down-web distance $\Delta z$, and $j$ and $k$ are matrix indices along cross-web and down-web directions, respectively.

The provided techniques can be used for both continuous full-web coated extrudates and stripe coated extrudates. In a full-web coating, the multitude of measured values represent the entire coated width. In the case of stripe coating, measured thickness values corresponding to a plurality of coated regions spaced apart each other along a cross-web direction, such that the measured values only cover the coated stripes and not the uncoated lanes in-between.

As indicated in FIG. 4, the next step is to perform a Web-to-Die Mapping (block 404) of these profile measurements. Certain simplifying assumptions can be made when mapping the gauge measurement to the die. First, it can be assumed that the data received from the profile measurements are taken from edge-to-edge, given that modern gauging systems have edge detection. Second, it is assumed that gauge data directly corresponds to actual extrudate weights/thicknesses. If the web is disposed on a release liner, it can be further assumed that the basis weight of the release liner is subtracted, and the data represents the coating weight only. Finally, it can be assumed that there is symmetrical neck-in from both edges of the extruded web.

The number and locations of the coarse-grained measurements is often different from that of the die lip actuators, and so, a generalized method of mapping the measurement values to actuator locations is desired. Film neck-in calculations can consider the effects of different flow rates, draw distances, and web speeds. In one embodiment, coated web coordinates in physical units (inches or mm) are mapped to the coordinates in actuator units, (i.e., a die coordinate system based on sequential actuator number). This process enables mapping from a coating measurement array value to a physical coated web position, and then through the web-to-die mapping function to a physical die position. Here, the coating measurement array can represent, for example, the most recent array of thickness measurements generated each time a scanner traverses the moving web.

It is also possible for the process to be reversed (i.e., a die-to-web mapping) such that it includes similar steps in reverse order. Instead of a direct mapping, the reverse procedure could include an interpolation of the coating measurement array. That is, a direct mapping of the die actuator locations to the corresponding position on the coated web (through the die-to-web mapping function-the inverse of the web-to-die mapping function), followed by interpolation (low order polynomial interpolation such as Hermite cubic polynomials, which features continuous function and first derivative) of this direct mapping for the actual measurement array values.

In cases where the mapping function evaluations, either web-to-die or die-to-web, are computationally inefficient or impractical, then the reverse procedure can be preferred, as it tends to enable a significantly faster response time. In addition, it can be useful to simplify the mapping by avoiding use of physical coordinates altogether. The simplest mapping may be from die actuator coordinate directly to coating measurement array coordinate (coated web coordinate based on relative location compared to the measurement array number). This logical extension is likely to be the most computationally efficient (e.g., using cubic polynomial interpolation), but transparency of understanding may suffer since no physical coordinate system is involved.

With a suitable die-to-web or web-to-die mapping function, it may be advantageous to utilize the function elsewhere in the profile control scheme. For example, the mapping could incorporate cross-web variation in the control parameters, such as controller gain or actuator interaction through the coating flow field. This could be done in an ad-hoc fashion based on production experience or in a more scientifically-based manner using fluid mechanical models of the coating flow field.

Modeling the flow may use of any appropriate models characterizing fluid rheology. For example, modeling the flow may include finite element analysis or may more directly rely on one or more equations. As one example, for a power law fluid, the relationship between flow in the slot and the slot geometry is given by Equation 2 below:

$$\frac{Q}{W} = \frac{nH^2}{2(1+2n)} \left(\frac{HP}{2KL}\right)^{\frac{1}{n}} \qquad \text{(Equation 2)}$$

, where $Q/W$ is the flow per unit width, $H$ is the slot height, $P$ is pressure, $L$ is die width, $n$ is the power law index and $K$ is the coefficient for power law viscosity. A Newtonian constant viscosity fluid has $n$=l, with $K$ representing the numerical viscosity.

As another example, slot uniformity can be characterized by the uniformity of the walls of the slot. If each slot has a Total Indicated Runout or TIR of 2t, then the percent uniformity of the flow from the slot can be determined by Equation 3 below:

$$\% \, Coating \, Uniformity = 100 \times \frac{(H+t)^{\left(2+\frac{1}{n}\right)} - (H-t)^{\left(2+\frac{1}{n}\right)}}{H^{\left(2+\frac{1}{n}\right)}} \qquad \text{(Equation 3)}$$

For a constant viscosity (i.e., Newtonian) fluid, this means that the coating uniformity varies according to the cube of slot height H. This relationship is shown as Equation 4:

$$\% \, Coating \, Uniformity = 100 \times \frac{H_{max}^3 - H_{min}^3}{H_{min}^3} \qquad \text{(Equation 4)}$$

Equation 4 might not be directly used to predict slot settings, since it may not account for all details including details related to the extrusion flows, materials, to the die design itself. This equation, however, demonstrates the benefits of providing a precisely tuned height profile across the width of the die. In particular, Equation 4 demonstrates that any variations in the height of the fluid flow path are magnified in the resulting cross-web profile of the extrudate.

Equation 2 may, for example, be used to predict a slot die change because, according to the techniques disclosed herein, the position of the actuator, and by inference the slot height H, is known in combination with the desired extrudate target thickness, the current measured extrudate thickness. Previously, knowing the absolute position of the slot height during an extrusion process has not be possible, e.g., due to the backlash in differential bolts. Using the known target thickness and the measured extrudate thickness profile, Equation 2 can predict an appropriate slot die change. For example, as we know by inference the relationship between slot height profile and extrudate thickness profile from the known slot height profile and the measured extrudate thickness profile and can thus predict a slot height profile to obtain the target thickness profile.

Assuming that other elements of the flow path are of less importance, for a Newtonian fluid, the predicted slot height corresponding to actuator $i$, $H'_i$ is calculated as shown in Equation 5:

$$H'_i = \left(\frac{t_i{'}}{t_i}\right)^{\frac{1}{3}} H_i \qquad \text{(Equation 5)}$$

For a Power Law fluid, Equation 5 may be represented as Equation 6.

$$H'_i = H_i \left(\frac{t_i'}{t_i}\right)^{\frac{1}{2+1/n}}$$

(Equation 6)

For a more generalized Power Law fluid, Equation 5 may be represented as Equation 7.

$$H'_i = H_i \left(\frac{t_i'}{t_i}\right)^{Exponent}$$

(Equation 7)

For purposes of illustration, the fluid mechanical predictions can include the geometric circumstances of the die. For a flexible die lip such as flexible die lip 32 in FIG. 3, the slot height may be better approximated by considering converging or diverging slots with a nominal fixed slot at the hinge point. Assuming the hinge point slot remains constant, then Equation 8 can apply:

$$H(x) = H_{hinge} + \frac{H_{lip} - H_{hinge}}{L} x$$

(Equation 8)

Then, according to the fluid mechanics lubrication approximation flow/width can be provided by Equation 9 as follows:

$$\frac{Q}{W} = \frac{(P_{lip} - P_{hinge}) H_{hinge}^2 H_{lip}^2}{6\mu(H_{hinge} + H_{lip})}$$

(Equation 9)

, where $\mu$ is viscosity of the extrudate, once again assumed to be a Newtonian fluid. Using Equation 9, slot height H can then be provided by Equation 10:

$$H'_{i,lip} = \frac{C_i \pm \sqrt{C_i^2 + 4C_i H_{i,hinge}^2}}{2H_{i,hinge}^2}$$

(Equation 10)

, where

$$C_i = \frac{H_{i,hinge}^2 H_{i,lip}^2}{H_{i,hinge} + H_{i,lip}}$$

These closed form examples are useful, but it is to be understood that one may extend the model to include any number of other mechanical, thermal, and fluid dynamical process details. The better the predictive model, the more rapid the techniques disclosed herein will converge to the best operating condition for the desired extrudate profile.

In some embodiments, this mapping incorporates any scan-location-to-die-bolt-location mapping already built into the measurement system. Various commercial systems are capable of performing web-to-die mapping, such as profile control solutions from NDC Infrared Engineering Inc., Irwindale, CA.

Following the web-to-die mapping step, profile control strategies proceed with a Data Compression step (block 406). Ordinarily the coating measurement array will contain many more elements than there are lip actuators (500-1000 measurement elements compared to 20-40 actuators). Advantageously, the Data Compression (block 406) can improve computing efficiency and provide faster responsiveness of the controller in processing multidimensional profile data, particularly in cases involving complex mechanical and fluid-dynamic interactions. Data compression is sometimes referred to as "coarse graining" since small scale variations can be converted to a scale of variation that the actuators can influence.

Once the actuator zones and measurement zones are defined along a common coordinate system (e.g., corresponding to the die location), conversion between the two can be carried out using various methods.

One method is based on use of an overlap matrix $OL$, defined according to Equation 11:

$$OL_{ij} = \int_{-\infty}^{\infty} S(\alpha, A_i, w) S(\alpha, M_j, G_j) \, d\alpha$$

(Equation 11)

$$S(\alpha, x, l) \equiv 1 \ \ if \ \ x - \frac{l}{2} \leq \alpha \leq x + \frac{l}{2}, \ otherwise \ 0$$

, where $S(a,x,l)$ is a square wave function dependent on cross-web coordinate $a$, zone location $x$, and zone width $l$. In the notation above, $A_i$ is the cross-web coordinate of the $i^{th}$ actuator zone, $G_j$ is the cross-web coordinate of the $j^{th}$ measurement zone, and $w_i^a$ and $w_j^s$ are the widths of actuator- and scan-based zones, respectively, as defined along the cross-web coordinate.

This overlap matrix represents a convolution of the actuator zone of influence with the measurement zone. This rectangular matrix contains one row for each actuator and one column for each measurement value. The coordinate system used above (i.e., the coordinate a) can be based on actuator number, where the actuators are numbered from 0 to $N_{act}$-1 where $N_{act}$ is the total number of actuators. The width between the actuators would be unity (i.e., 1) in this coordinate system, with the influence zone of each actuator extending ½ of the actuator spacing in both cross-web directions from its location. That is, the zone for actuator j runs from $j-1/2$ to $j+1/2$. This is represented by the Square function defined above, $S(a, j, l)$ for actuator j. Similarly, each measurement value has a zone associated with it which would normally be the cross-web zone, $\Delta x$, of data points that constitute its value, i.e., $S(a, M_i, \Delta x)$.

When coating stripes, $\Delta x$ can represent the width of the stripe associated with the measurement value. In a full-width coating, $\Delta x$ can represent the entire cross-web width of the coating. Applying Equation 11 above to an exemplary stripe coating, the actuator zone width, $w_i^a$, could be 1 and $w_j^s$ could be the respective stripe width. In either case, the measurement value, $M_j$, is referenced to the cross-web coordinate $a$, and so, incorporates any location mapping inherent to the measurement system.

By computing the overlap matrix above for a stripe or full-width coating, a general method of transforming measurement values to values associated with individual actuators can be realized. For example, a given array of measurement values $M^s$ can be simply multiplied by the overlap matrix to create an actuator-associated array $M^a$ according to Equation 12 below:

$$M_i^a = \sum_j OL_{ij} M_j^s \qquad \text{(Equation 12)}$$

Here, the superscript $a$ refers to an actuator-based value whereas the superscript s refers to measurement scan-based values.

Alternative methods are also possible. For instance, interpolation & extrapolation methods can be used to account for actuator zone of influence with the measurement zone. As an example, a spline interpolation method could be used to map measurements to individual actuators.

Table 1 below demonstrates how the stripe location and coating thickness can be converted between stripe and actuator locations using two different methods. Here, the 3$^{rd}$ column represents measured coating thickness, with the last column showing the Overlap

TABLE 1.

| Stripe number | Stripe center location (centimeters) | Stripe width (centimeters) | Coating thickness (micrometers) | Actuator number | Actuator position at stripe center (centimeters) | Spline-interpolated coating thickness (micrometers) | Overlap Matrix-mapped coating thickness (micrometers) |
|---|---|---|---|---|---|---|---|
| 1 | 5.20 | 3.355 | 940.05 | 1 | 2.54 | 947.50 | 940.05 |
| 2 | 13.34 | 5.466 | 940.05 | 2 | 8.89 | 930.88 | 940.05 |
| 3 | 22.52 | 5.466 | 1019.56 | 3 | 15.24 | 955.50 | 940.05 |
| 4 | 31.71 | 5.466 | 970.03 | 4 | 21.59 | 1015.67 | 1019.56 |
| 5 | 40.90 | 5.466 | 935.48 | 5 | 27.94 | 1000.91 | 978.66 |
| 6 | 50.09 | 5.466 | 965.20 | 6 | 34.29 | 952.80 | 970.03 |
| 7 | 59.28 | 5.466 | 973.84 | 7 | 40.64 | 935.36 | 935.48 |
| 8 | 68.47 | 5.466 | 940.56 | 8 | 46.99 | 952.63 | 965.20 |
| 9 | 77.66 | 5.466 | 976.88 | 9 | 53.34 | 975.06 | 965.20 |
| 10 | 86.85 | 5.466 | 948.69 | 10 | 59.69 | 972.49 | 973.84 |
| 11 | 96.04 | 5.466 | 902.97 | 11 | 66.04 | 944.17 | 940.56 |

(continued)

| Stripe number | Stripe center location (centimeters) | Stripe width (centimeters) | Coating thickness (micrometers) | Actuator number | Actuator position at stripe center (centimeters) | Spline-interpolated coating thickness (micrometers) | Overlap Matrix-mapped coating thickness (micrometers) |
|---|---|---|---|---|---|---|---|
| 12 | 105.23 | 5.466 | 903.48 | 12 | 72.39 | 953.57 | 949.71 |
| 13 | 114.42 | 5.466 | 963.17 | 13 | 78.74 | 978.05 | 951.48 |
| 14 | 123.61 | 5.466 | 934.97 | 14 | 85.09 | 958.37 | 948.69 |
| 15 | 132.80 | 5.466 | 965.96 | 15 | 91.44 | 923.65 | 925.58 |
| 16 | 141.99 | 5.466 | 984.25 | 16 | 97.79 | 897.36 | 902.97 |
| 17 | 151.18 | 5.466 | 1003.58 | 17 | 104.14 | 898.40 | 903.48 |
| 18 | 159.32 | 3.355 | 930.40 | 18 | 110.49 | 943.13 | 948.94 |
| | | | | 19 | 116.84 | 960.73 | 963.17 |
| | | | | 20 | 123.19 | 935.56 | 934.97 |
| | | | | 21 | 129.54 | 951.48 | 965.96 |
| | | | | 22 | 135.89 | 973.51 | 965.96 |
| | | | | 23 | 142.24 | 985.01 | 984.25 |
| | | | | 24 | 148.59 | 1005.69 | 1003.55 |
| | | | | 25 | 154.94 | 978.71 | 983.23 |
| | | | | 26 | 161.29 | 907.29 | 930.40 |

Matrix mapped data. This charts shows the Overlap Matrix mapping of coating thickness to each actuator location. The 5th column shows spline-interpolated values. These do not exactly match the Overlap Matrix values, reflecting the fact that these values were mapped using two different methods.

The workflow 400 then proceeds to obtain a Profile Deviation (block 408). One simple technique uses a square wave convolution with the difference between the coating weight measurement and the desired coating weight. The square wave has a value of 1 within ½ actuator spacing on either side of the actuator location and has a value of 0 elsewhere. The width between the actuators is defined as unity (or 1) in this coordinate system. This difference can be represented as a set of residual values $R_i$ that can be computed for each Actuator $i$ according to Equation 13 below:

$$R_i = \int S[A_i](t_m - t_d)dX \qquad \text{(Equation 13)}$$

, where $S$ is a generalized square wave function centered around cross-web coordinate $A_i$ and $t_m$ and $t_d$ represent measured and desired coating weights, respectively.

According to Equation 13, the Data Compression combines knowledge of the measured extrudate thickness at the die with input regarding a desired cross-web profile for extrudate thickness, defining a Target Profile (block 407), to obtain the Profile Deviation (block 408). The overall residual array R represents the degree to which the current coating weight measurements deviate from the Target Profile (block 407) at each actuator position.

The Target Profile (block 407) can be manually set by an operator or may be automatically set by the controller according to a control algorithm for the application at hand. In some applications, a flat profile is desired, but there are situations where other profiles are preferred. For example, a "dog-bone" shaped target profile might be desired to control edge instabilities in the extrusion process, such as those relating to draw resonance or edge scalloping.

While aforementioned square wave convolution is simple to implement, it does not account for several important aspects of the flow field physics. For example, there is no interaction between the residual array elements and neighboring actuators whereas from a flow field standpoint there can be a wide influence zone. Commonly, the movement of a single actuator influences the flow field globally through relative flow rates and in other instances locally in the vicinity of each actuator.

The strength and range of actuator interactions can be affected by various factors, including slot die geometry and structure, materials of construction, coating liquid, coating method, and coating bead flow. One way to capture actuator interactions in the data compression step is to construct the residual array using a flow sensitivity convolution, in which $\partial t_m/\partial \Delta H_i$ denotes flow sensitivity, or the sensitivity of coating weight (i.e., extrudate thickness) to a change in slot height as shown in Equation 14:

$$R_i = \int \frac{\partial t_m}{\partial \Delta H_i}(t_m - t_d)dX \qquad \text{(Equation 14)}$$

In this construct, each residual array element represents the sensitivity of that part of the coating weight profile to slot height at a cross-web position of a particular actuator.

As an alternative approach, the residual array could be provided from a filtering viewpoint, such as based on a Fourier or Wavelet transform. In that view, the residual array contains particular modes that when removed from coating profile will lead to the desired thickness profile. For example, a wavelet transform $\Psi$ based on two parameters, wavelet location $a$ and scale $\sigma$, is provided in Equation 15 below:

$$R_i = \Psi^i(a,\sigma) = \int \psi^i(a,\sigma)(t_m - t_d)dX \qquad \text{(Equation 15)}$$

While the flow sensitivity and wavelet transform convolution can be quite different, it was surprisingly discovered that the thickness sensitivity to actuator movement can be closely represented by a wavelet function for extrusion dies. The Ricker Wavelet (sometimes referred to as the "Mexican Hat Wavelet" due to its shape) in particular provides a very close approximation to the thickness sensitivity to actuator movement for actuators not adjacent to the lateral edges of the slot die.

The shape of the Ricker Wavelet provides a unique technical benefit, as it extends both above and below the x-axis in such a way that the overall wavelet has an overall integrated area of zero. This shape can accurately simulate, for certain slot dies, the depletion of fluid flow occurring at neighboring actuator positions when fluid flow is increased at a given actuator position.

Wavelet transforms can be potentially more useful than Fourier transforms as the former provides more localized information. Fourier transforms typically extract only frequency information whereas wavelet transforms extract both the wavelet scale (similar to wavelength) and location. But in the case of controlling a choker bar or flexible die lip with actuators, particular wavelet transforms are particularly useful in guiding adjustments near to the actuators and at the same general scale as the magnitude of actuator adjustments. Advantageously, this is an efficient representation because the wavelet only captures the portion of the thickness profile that the actuator can mediate.

In an exemplary workflow, the wavelet location for a given actuator is centered at the actuator and the wavelet scale is based on computed flow/actuator sensitivities, both of which are used in transforming slot height profile data.

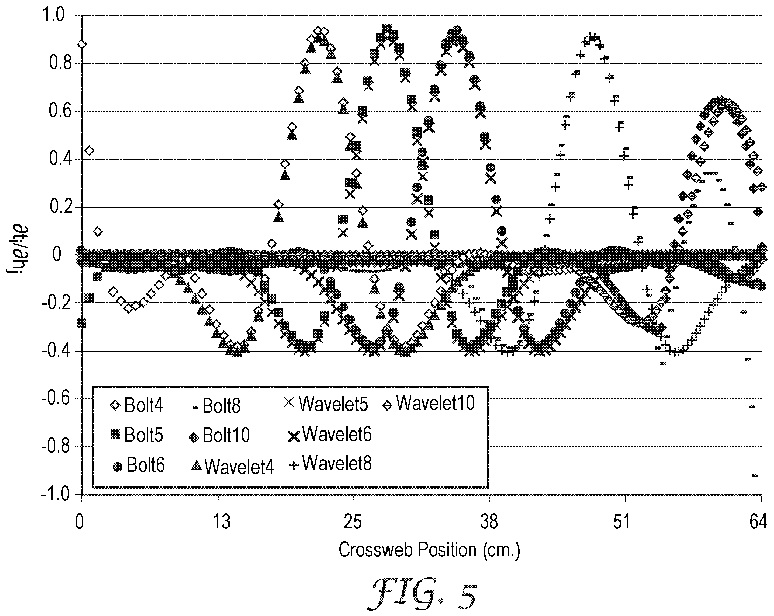

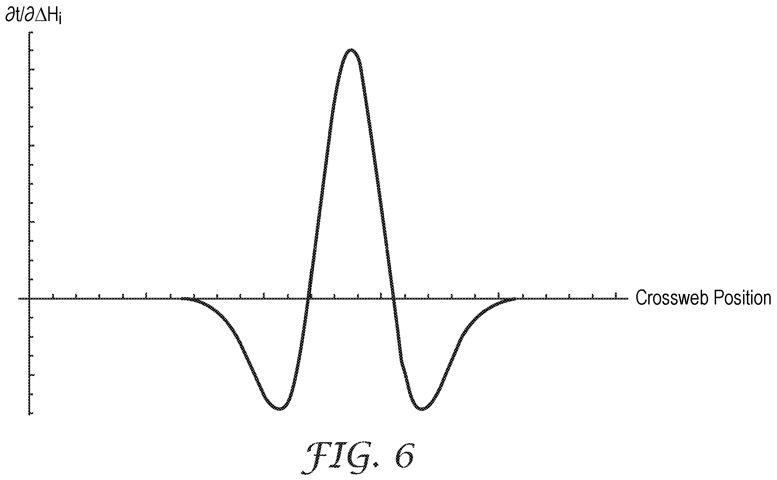

Calculations of the flow sensitivity to individual actuator movement for an exemplary extrusion die are shown in FIG. 5. These calculations were made using finite element analysis software that predict fluid dynamics effects in a representative extrusion die. As shown by these data, flow sensitivity for the middle actuators is well approximated by the Ricker Wavelet, shown in FIG. 6. Based on this assumption, the flow sensitivity for at least two actuators, and in some cases all of the interior actuators, can be treated as identical for the purposes of this model. Since the Ricker Wavelet does not represent as well the flow characteristics of actuators near the lateral edges of the applicator slot, a modified or alternative model could be used to describe the flow sensitivities for end actuators.

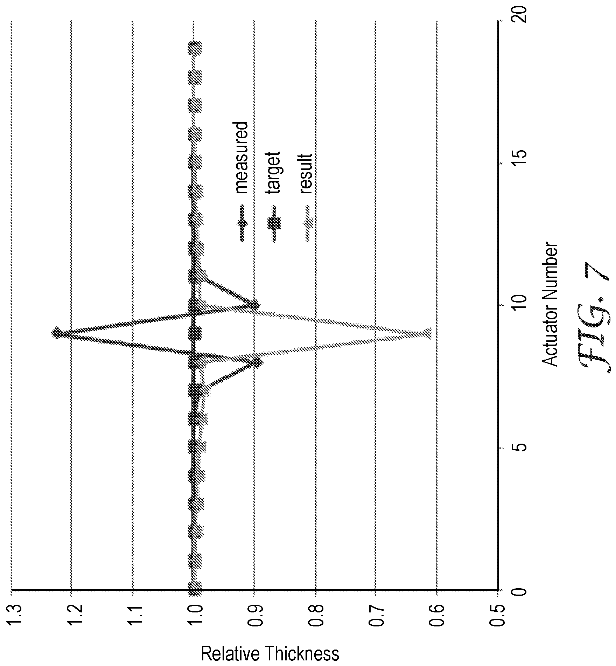

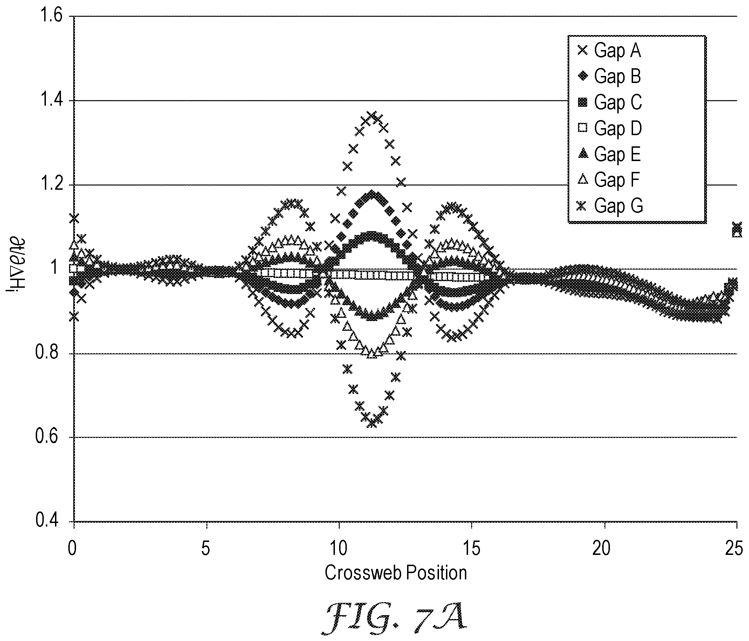

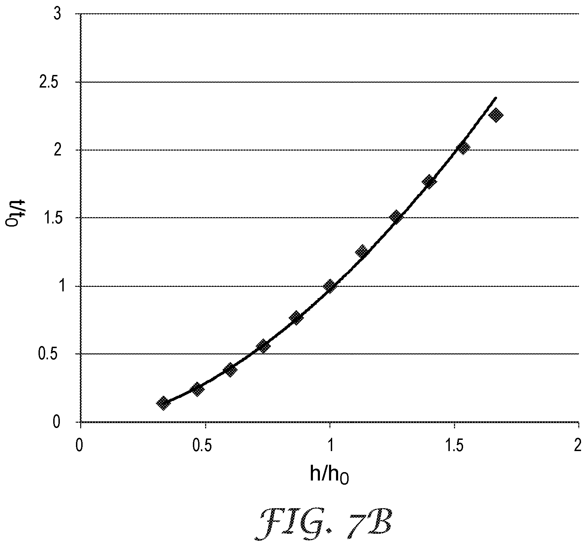

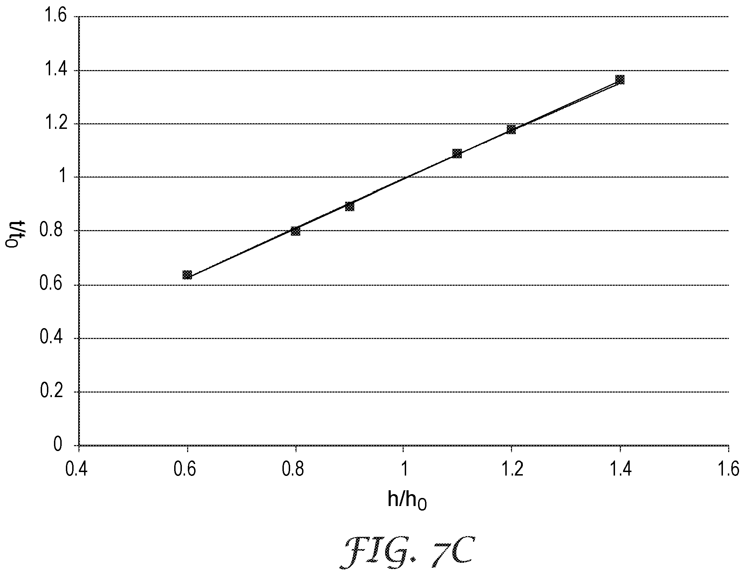

FIG. 7 provides a simple illustration of the potential usefulness of wavelet functions for actuator interaction. The "Target" data points are in the shape of a desired flat extrudate thickness profile, while the "Measured" data points show a profile deviation in the shape of a Ricker Wavelet. A non-interacting scheme, such as the square wave convolution, would make three actuator moves in response to this deviation. Here, Actuator #9 would be moved down (smaller gap) while Actuator #8 and Actuator #10 would be moved up. But since the profile deviation has a very similar shape to the thickness sensitivity for this extrusion die, this number of actuator moves is a case of overcorrecting and would require multiple corrections to correct the profile deviation. A scheme that correctly captures actuator interaction, such as those informed by reasonably accurate flow field physics, can correct this deviation in one step, as shown in the "Result" data points.

Referring back to FIG. 4, once residual array R has been determined, an appropriate Slot Height Adjustment can then be determined (block 410). When predicting the adjustment to the plurality of actuators engaged to the flexible die lip or choker bar suitable to achieve the Target Profile (block 407), it is advantageous to apply a pressure die deflection model that enables the effects of fluid flow through the die to be decoupled from mechanical effects relating to the slot die in absence of fluid flow. A suitable model can predict the pressure profile across the applicator slot and corresponding amount of pressure deflection in the flexible die lip or choker bar. In some cases, it can be possible to empirically measure this pressure-based deflection (i.e., Pressure Deflection D).

The pressure deflection can be accounted for by adding it to a calculated slot height, and the sum compared with a pressure-compensated slot height profile from the Current Slot Height (block 409), which includes pressure deflection due to fluid flowing through the applicator slot. Then, assuming that any change in the amount of deflection D (i.e., ΔD) is small, then the deflection D solely attributable to the fluid can be subtracted from the pressure-compensated slot height profile, H+D, to obtain the zero-pressure slot height profile (H), thereby providing a nexus to calculating the target actuator positions.

In an exemplary method, the pressure die deflection model is based on the local dependence of coating thickness to slot height. This can be modeled by expanding a Taylor's series around the current slot height. Assuming there is only a small perturbation from the setpoint, only the linear term need be retained, as shown in Equation 16:

$$t = t_0 + \frac{\partial t}{\partial \Delta H}\bigg|_{\Delta H = 0} \Delta H \qquad \text{(Equation 16)}$$

, where $t$ is a new coating thickness, $t_0$ is a current coating thickness, and $\Delta H$ is a change in slot height. If many small profile corrections are taken, this linearized form can be sufficient. In the interests of rapid control, however, large profile corrections are needed. Unfortunately, use of the linearized form in these cases can lead to unstable control.

To overcome this problem, a non-linear control scheme can be instituted in a non-interacting context. For each actuator, adjustments are made according to Equation 17:

$$\Delta H = (H_0 + D)\left[\left(\frac{\tilde{t}_d}{\tilde{t}_0}\right)^{\frac{1}{E}} - 1\right] \qquad \text{(Equation 17)}$$

, where $\Delta H$ is a change in slot height, $H_0$ is a current slot height, $\tilde{t}_d$ is a desired (i.e., target) coating thickness, and $\tilde{t}_0$ is a current coating thickness, and E is an exponent relating to the power law index of the fluid.

Equation 17 still requires a prediction of $D$ (i.e., die deflection) across the coating die width. This could be obtained using Equation 18:

$$D = K_0\left(1 + K_1 x^2 + K_2 x^4 + K_3 x^6\right)P \qquad \text{(Equation 18)}$$

, where $K_0$ is a scaling factor. $K_1, K_2,$ and $K_3$ are polynomial coefficients, $P$ is internal die cavity pressure, and $x$ is cross-web position along the applicator slot as measured from the die center.

Through Equation 18, the pressure die deflection model considers the effect of die cavity pressure, but Equation 18 is predicated on certain assumptions. For example, lip deflection is assumed to be approximately symmetric about the die center-line and well-approximated with low-order polynomial. The polynomial coefficients can be provided by calculation and/or measurement. Deflection of the flexible die lip or choker bar can also be assumed to be proportional to the die cavity pressure. This assumption is generally well-justified if P is the actual die cavity pressure, but if P is measured significantly upstream of the die, for instance at a feed hose or compounder outlet, modifications may be warranted. Further, is acknowledged that all dies would not necessarily deflect symmetrically (for example an end fed die might not), so a different appropriate correlation model of die deflection would be used in those instances.

In one embodiment for a flexible die lip configuration, deflection of the die is characterized using an array of measurement indicators that detects deflection of both the fixed lip side and flex lip side. Alternatively, a taper gauge can be used to measure directly the die slot height under multiple conditions: (1) with flow & pressure, (2) no flow and no pressure, where D is calculated by subtracting slot height (2) from slot height (1).

Advantageously, the non-linear model of Equations 17 and 18 allows rapid control using relatively large corrections without encountering unstable control. The number of control steps could be reduced further by also incorporating interactions between the actuators that are transmitted through the flow field. In a preferred embodiment, the wavelet thickness sensitivity introduced in Equation 15 above can be used and combined with the previous non-linear functional form, providing a non-linear, interacting form of the coating thickness as shown in Equation 19:

$$t(X) = t_0 + \psi^i(X)\, t_0 \left[\left(1 + \frac{\Delta H}{H_0 + D}\right)^E - 1\right] \qquad \text{(Equation 19)}$$

In the ordinary Newton-Raphson context, actuator position updates proceed with the solution of the following matrix equation which incorporates flow field actuator interactions, as reflected in Equation 20:

$$\int \psi^i \psi^j dX \cdot t_m^0 \left[ \left(1 + \frac{\Delta H_j}{H_0 + D}\right)^E - 1 \right] = \int \psi^i (t_d - t_m^0) dX \qquad \text{(Equation 20)}$$

This is essentially equivalent to the non-linear, non-interacting form above, except that the wavelet transform convolution is being pre-conditioned by a fluid flow interaction matrix as shown in Equation 21:

$$t_0 \left[ \left(1 + \frac{\Delta H_j}{H_0 + D}\right)^E - 1 \right] = \left( \int \psi^i \psi^j dX \right)^{-1} \cdot \int \psi^i (t_d - t_m^0) dX \qquad \text{(Equation 21)}$$

In its final form, actuator updates can proceed based according to Equation 22:

$$\Delta H_j = (H_0 + D) \left\{ \left[ 1 + \frac{1}{t_m^0} \left( \int \psi^i \psi^j dX \right)^{-1} \cdot \int \psi^i (t_d - t_m^0) dX \right]^{\frac{1}{E}} - 1 \right\} \qquad \text{(Equation 22)}$$

The right side of this equation provides a vector representing a coating thickness error projected onto an actuator coordinate space, while the integral product above represents a linear algebraic solution of all actuator projections to produce the correction vector of actuator movements. The non-linearity of the wavelet representation is especially applicable to large actuator adjustments, and it was found that Equation 22 can capture approximately 80-90% of the non-linear behavior.

Using the mathematics of finite variations instead of infinitesimal calculus for the nonlinear part, the wavelet interaction matrix then becomes a pre-conditioner for the coarse-grained residual vector. Both non-interacting and interacting, but linearized (where E is approximately 1), variations of this analysis can significantly simplify Equation 20 along the pathways illustrated below:

Interacting & Nonlinear

$$\int \psi^i \psi^j dX \cdot t_m^0 \left[ \left(1 + \frac{\Delta H_j}{H_0 + D}\right)^E - 1 \right] = \int \psi^i (t_d - t_m^0) dX$$

Non-interacting actuators
$$\psi^i \to S^i$$

Interacting, but linearized
$$\Delta H_j \to 0$$

$$\left[ \left(1 + \frac{\Delta H_j}{H_0 + D}\right)^E - 1 \right] = \frac{(\tilde{t}_d - \tilde{t}_m^0)}{\tilde{t}_m^0} = \frac{\tilde{t}_d}{\tilde{t}_m^0} - 1 \qquad \frac{\tilde{t}_m^0 E}{H_0 + D} \Delta H_j = \left[ \int \psi^i \psi^j dX \right]^{-1} \cdot \int \psi^i (t_d - t_m^0) dX$$

$$\Delta H_j = (H_0 + D) \left[ \left( \frac{\tilde{t}_d}{\tilde{t}_m^0} \right)^{\frac{1}{E}} - 1 \right]$$

A further embodiment is to use physics-based model calculations in the control algorithm. For example, this can be enabled by a computer running fluid-mechanical calculations, with information passing where the updated manifold calculations are completed before the next measurement scan.

A Gaussian Elimination matrix solution can be applied to simultaneously solve the pertinent linear algebra problem, regardless of whether there is interaction between the actuators (i.e. matrix rows). A preferred embodiment uses a Gaussian Elimination but takes advantage of the fact that matrix elements are constant for a given number of actuators and wavelet functions. For efficiency, it can be useful to perform a matrix lower-upper (LU) decomposition once up front and then store the decomposition factors. For each new residual vector from the wavelet convolution, the L decomposition factors can be applied, followed by a fast upper triangular matrix solution. So, whereas the original LU decomposition would require on the order of $b*N^2$ operations, each solution only requires on the order of $b*N$, where b is bandwidth, and N is the number of actuators.

In an alternative notation showing more explicitly the vector and matrix calculations applied in Equations 19-22, the slot height adjustments can be determined from Equation 23 as follows:

$$t_d = t_0 + t_0 \otimes \sum_i \psi_i \left[ \left( 1 + \frac{\Delta h_i}{h_{0,i} + d_i} \right)^E - 1 \right] \qquad \text{(Equation 23)}$$

, wherein $t_d$, $t_0$, and $\Psi_i$ are vectors representing desired coating thickness, current coating thickness, and the Ricker wavelet; $\Delta h_i$, $h_{0,i}$ and $d_i$ are scalar quantities representing, for each actuator coordinate $i$, adjustment in slot height, current slot height, and fluid pressure deflection; and $E$ is the power law fluid exponent. The summation operation allows the change to cross-web profile to reflect the sum total of effects from all actuators.

Advantageously, this approach handles the non-linear relationship between changes in die slot width and the scale of the response. This distinction and extension is illustrated where calculate the $q$ vector but then uses a non-linear function to determine the changes in die slot width necessary to realize the desired $q$.

From here, factoring out vector $t_0$ leads to Equation 24:

$$t_d = t_0 \otimes [1 + A(q - 1)] \qquad \text{(Equation 24)}$$

, where

$$q = \begin{bmatrix} \left( 1 + \frac{\Delta h_1}{h_{0,1} + d_1} \right)^E \\ \left( 1 + \frac{\Delta h_2}{h_{0,2} + d_2} \right)^E \\ \vdots \end{bmatrix}$$

and

$$A = \begin{bmatrix} \psi_1 & \psi_2 & \cdots \end{bmatrix}$$

Then, performing an element-by-element division of vectors by $t_0$ allows for isolation of vectors $A$ and $q$, as provided in Equation 25.

$$t_d \oslash t_0 - 1 = A(q - 1) \qquad \text{(Equation 25)}$$

, in which the $\oslash$ operator designates an element-by-element division of vectors. Solving for $q$ leads to Equations 26 and 27:

$$A'(t_d \oslash t_0 - 1) = A'A(q - 1) \qquad \text{(Equation 26)}$$

$$q = 1 + (A'A)^{-1} A'(t_d \oslash t_o - 1) \qquad \text{(Equation 27)}$$

Once the required influence from each actuator is known, Equation 28 can be used to determine the necessary changes in slot width required to achieve those results based on the nonlinear relationship between slot width and local flow.

$$\Delta h_i = \left( h_{0,i} + d_i \right) \left( q_i^{\frac{1}{E}} - 1 \right) \qquad \text{(Equation 28)}$$

To understand the dependence of this profile control algorithm on actual fluid hydrodynamics, the exponent E should accurately reflect the thickness sensitivity to slot height changes. Manifold flow calculations afforded by commercially-available computational software can be used to obtain this information. Calculations of flow sensitivity for different magnitudes of gap changes can be used to determine the most physically relevant exponent E. These are shown in FIGS. 7A-7C, which show coating thickness measured over a range of different slot heights to estimate E based on the general power-law fluid relationship of Equation 29:

$$\frac{t_1}{t_0} \propto \left(\frac{h_1}{h_0}\right)^E \qquad \text{(Equation 29)}$$

, where for a given actuator position, $h_1$ and $t_1$ are respective slot height and coating thickness following a small perturbation (or "bump") to slot height, $h_0$ and $t_0$ are respective slot height and coating thickness prior to the small perturbation (or "bump") to slot height (note that these do not represent the slot height and coating thickness changes resulting from workflow 400 in FIG. 4).

As shown in FIG. 7A, the exponent E can be estimated using a curve fitting method based on the relationship of Equation 18, which can be re-expressed as shown below in Equation 30:

$$\frac{t_{new}}{t_{old}} = \left(\frac{h_{new}+D}{h_{old}+D}\right)^E \qquad \text{(Equation 30)}$$

The curve-fitting examples show that different slot dies can behave differently, yielding different exponents. In this way, the profile control algorithm can be customized to perform optimally depending on the die design and mode of use.

An appropriate Slot Height Adjustment (block 410) is then determined, given the knowledge of the Profile Deviation (block 408) obtained above and the Current Slot Height (block 409). Here, the Current Slot Height (block 409) incorporates both the original slot height profile (with no pressure correction) and pressure correction to create the pressure-corrected slot profile. The Slot Height Adjustment (block 410) entails application of, for example, Equations 17 and 22 and then subtraction of the pressure correction to determine a predicted zero-pressure slot height profile corresponding to the Current Slot Height (block 409).

With the zero-pressure slot height profile obtained above, the controller 300 can then predict a set of discrete actuator settings suitable to achieve the desired slot height profile. In a preferred embodiment, this set of discrete actuator settings is based on a plurality of actuator settings corresponding to a pre-selected cross-web profile. As will be described below, the plurality of discrete actuator settings can be determined for a series pre-selected cross-web profiles, thereby providing a predictive model later used to determine an Actuator Adjustment (block 412).

In different examples, controller 300 may retrieve the preselected cross-web profile from a non-transitory computer readable medium or may receive the preselected cross-web profile from a user input.

In a preferred embodiment, the prediction of the discrete settings from the plurality of discrete settings and/or the zero-pressure Current Slot Height (block 409) can be obtained through a mathematical construct called a stiffness matrix.

The stiffness matrix transforms actuator settings to corresponding slot height profiles in absence of flow field physics effects. Whether the adjustable gap is the final die slot or the choker bar slot, a knife coater, or other, a slot height profile can be determined by empirical measurement at a multitude of cross-web positions, represented by Equation 31.

$$h_i \equiv h(x_i), \text{ with } i \text{ ranging from } 1 \text{ to } N_m \qquad \text{(Equation 31)}$$

, where $h_i$ is slot height at the location of Actuator $i$, $x_i$ is a cross-web coordinate, and $N_m$ is the number of measurement points.

The value of the slot height at these measurement points depends upon the positions of the die lip actuators. In general, the functional form of this dependence can be represented by the Taylor Series of Equation 32:

$$h_i = h_i^0 + \sum_j \frac{\partial h_i}{\partial A_j}\bigg|_{A_0} (A - A_0)_j + \sum_{jk} \frac{\partial^2 h_i}{\partial A_j \partial A_k}\bigg|_{A_0} (A - A_0)_j (A - A_0)_k \qquad \text{(Equation 32)}$$

, where $h$ is a vector of slot height measurements, $A$ is a vector of actuator settings (in actuator units), and $h_0$ and $A_0$ refer to an initial set of slot height measurements and actuator settings, respectively. The length of vector $h$ would be $N_m$, with the length of vector $A$ being the total number of actuators, $N_a$. Note here that actuator units can be equivalent to actual displacements (e.g., 1 actuator unit = 0.2 micrometers).

Stiffness matrix $K$ is defined as $\frac{\partial h}{\partial A}$, above, a rank 2 $N_m \times N_a$ matrix, while the Hessian matrix, $\frac{\partial^2 h}{\partial A^2}$, is a rank 3 $N_a \times N_m \times N_a$ matrix. In some examples, the range of lip movement is generally within the range governed by linear elasticity such that that the Hessian matrix components and contributions from higher order terms are virtually zero. As a result, changes in the slot height due to actuator position changes can be closely represented by the stiffness matrix alone, as represented by Equation 33.

$$(h - h_0) = \frac{\partial h}{\partial A} \bullet (A - A_0) \qquad \text{(Equation 33)}$$

The stiffness matrix $K$ has $N_m \times N_a$ components and physically represents the change in the slot height at the measurement point, $x_i$, due to a change in the $j^{th}$ actuator position, $A_j$. If the die lip was infinitely flexible, almost all of the stiffness matrix components would be zero-only where the actuator position coincides with the measurement point would the stiffness matrix component be non-zero. If the measurement points are at the same locations as the actuators, in this scenario the stiffness matrix becomes diagonal, as represented by Equation 34.

$$K \equiv \frac{\partial h}{\partial A} = kI = k\delta_{ij} \qquad \text{(Equation 34)}$$

, where $I$ is the identity matrix, $k$ is a proportionality constant that converts actuator position changes to slot height changes and is the same for each actuator, and $\delta_{ij}$ is the Kronecker delta.

In practice, die lips and choker bars are not infinitely flexible and a change in an individual actuator changes the slot height in a region around the actuator location. How far this region of influence extends is reflected in how far from the diagonal nonzero components appear in the stiffness matrix. In this way, the lip stiffness matrix incorporates in its components all interactions between actuator movements and slot height changes across the entire width of the die.

Empirically measuring the stiffness matrix of a die lip can be accomplished by finite differencing. The difference between slot height measurements across the die slot width when each actuator is independently displaced provides the rows of the stiffness matrix. For example, centered differencing would proceed as shown in Equation 35:

$$K_{ij} \cong \frac{h_i(A_0 + \Delta_j) - h_i(A_0 - \Delta_j)}{2\Delta_j} \qquad \text{(Equation 35)}$$

This equation presumes that all actuators are at their initial locations except for the $j^{th}$ actuator which is displaced a number of units $\Delta_j$ in first the positive direction followed by a displacement in the negative direction. The difference between the slot height measurements at these two settings relative to the displacement magnitude provides a centered difference approximation to the stiffness matrix components. Centered differencing in this fashion offers higher accuracy than forward or backward differencing but does require twice as many measurements. Additional measurements at different displacements would allow the use of higher order differencing techniques, but centered differencing affords reasonable accuracy with limited effort.

Numerical differencing theory suggests that there is an optimal displacement magnitude that should be used in centered differencing to produce the most accurate stiffness matrix entries, (Richard L. Burden et al., Numerical Analysis 131-133 (2nd ed. 1981). The error implicit in centered differencing is second order accurate in the displacement size, i.e., is proportional to the displacement squared. But the slot height measurements have an uncertainty associated with them so when both of these errors are accounted for, the optimized actuator unit displacement $\Delta_{opt}$ is provided in Equation 36:

$$\Delta_{opt} = \sqrt[3]{\frac{3e}{M}} \qquad \text{(Equation 36)}$$

Here, $e$ is the slot height measurement error and M is an upper bound to the third derivative of the gap-actuator relationship, $\frac{\partial^3 h}{\partial A^3}$.

In a typical bump test, actuator displacements of approximately 1 mil (25 micrometers) change in the slot height were used. Significant interaction generally occurs between actuators-an actuator position change produced a slot height change as far as 2 or 3 actuators away. In some embodiments, this is represented by a banded stiffness matrix. In many cases, the banded stiffness matrix can be assumed to be symmetric. For example, the matrix could have significant nonzero components only along 5 diagonals of the matrix - the main diagonal plus 2 diagonals on either side. International Patent Publication No. WO 2012/170713 (Secor, et al.) describes in greater detail an example of how "bump" test data can be used to obtain the stiffness matrix.

Once the stiffness matrix is determined, slot height measurements can be used in two ways. First, for any set of actuator settings, the resulting slot height profile can be computed by multiplying the stiffness matrix with the actuator displacements. Secondly, the actuator settings that will result in a specified slot height profile are calculated by multiplying the inverse of the stiffness matrix with the desired change in slot height. These calculations are represented by Equations 37 and 38, respectively:

$$(h - h_0) = K \bullet (A - A_0) \qquad \text{(Equation 37)}$$

$$(A - A_0) = K^{-1} \bullet (h - h_0) \qquad \text{(Equation 38)}$$

Referring now to the Actuator Adjustment (block 412) in FIG. 4, where the desired zero-pressure Slot Height Adjustment (block 410) is known, the inverse stiffness matrix $K^{-1}$ can finally be used according to Equation 38 to obtain the Actuator Adjustment (block 412) for achieving the Target Profile. In a preferred method to solve this linear algebra problem, a Gaussian Elimination is performed to obtain a matrix-based solution of stiffness matrix transformations.

The above techniques can be carried out in real time using the actuator assembly 200 in FIG. 3. Here, the controller 300 predicts settings for at least one actuator assembly 200 based on measurements from sensor 230 and operating motor 210 to locate output shaft 222 to a location corresponding to the predicted Actuator Adjustment (block 412). Once controller 300 determines, in this manner, the settings for the actuator assemblies 200 in slot die 10 corresponding to the preselected cross-web profile, slot die 10 is operated by passing an extrudate through the fluid flow path and out applicator slot 6 with the actuator assemblies 200 positioned according to the Actuator Adjustment (block 412).

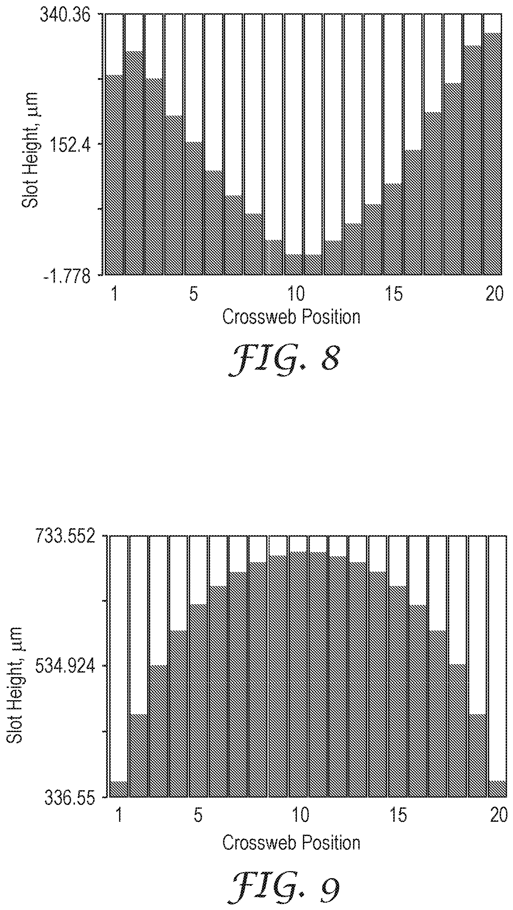

FIGS. 8-12 show an exemplary progression of slot profiles calculated according to the techniques described herein. FIG. 8 shows an example of a zero-pressure slot height profile obtained using the Stiffness Matrix alone, without considering flow field physics effects. FIG. 9 then shows a calculated pressure deflection correction based on a flow sensitivity model. This model was determined by experimentally measuring the die cavity pressure deflection and fitting the data to a model. However, the model might also be determined using finite element mesh for a deflection calculation utilizing a two-dimensional cross-section of the die in which the fluid flow through the distribution manifold and the structural deflection of the die body are fully coupled.

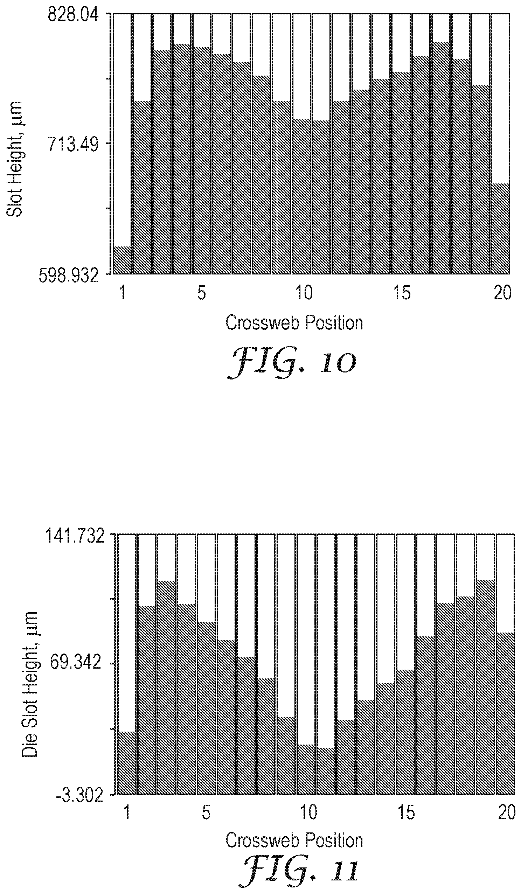

FIG. 10 shows the pressure-corrected slot height profile, representing the sum of the slot height profiles in FIG. 8 and FIG. 9. In Equation 17 above, FIG. 8 represents $H_0$, FIG. 9 represents D, and FIG. 10 represents the sum of $H_0+D$. Finally, FIG. 11 shows the actual flexing of the flexible die lip induced by the plurality of actuators relative to the flexible die lip in its neutral position.

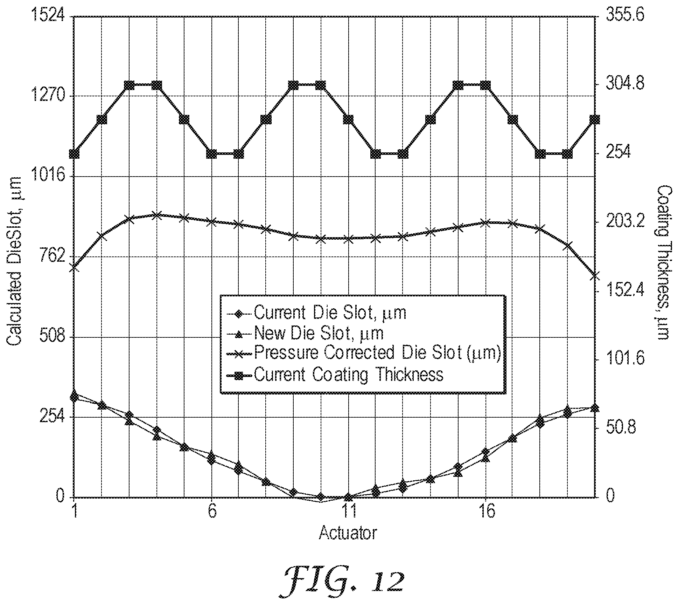

FIG. 12 shows the calculated pressure-corrected slot height profile compared with the current slot height profile. Besides yielding a significantly more uniform slot height profile, the present techniques further tend to show an average change in actuator position much larger than in the non-pressure compensated model. In FIG. 12, the oscillating current die slot was used as an example to illustrate how the new die slot profile oscillates, in a similar manner, above and below the current die slot profile.

These techniques can provide for a significantly higher efficiency in the die control method. Increased efficiency can, for example, come from reducing the number of repeated cycles in the workflow 400 of FIG. 4 to achieve the best attainable coating thickness profile. Significantly, this can result in less waste in a large-scale manufacturing process. More accurate and faster convergence can also help eliminate higher frequency disturbances to the coating thickness in the manufacturing operation than would otherwise be possible.

Following the execution of the Actuator Adjustment (block 412), workflow 400 resumes with a renewed Profile Measurement (block 402) and the process can begin again. This Profile Measurement (block 402) occurs after some time has elapsed, allowing for an iterative adjustment of the actuators. Various factors can be considered in determining the amount of time that elapses, including: 1) time for the adjustment/movement of the actuators, 2) time for the physical fluid flow/coating process to stabilize with the changed slot, 3) time for transport of the coating/extrudate from the die to the gauging system (e.g., the distance from die to gauge divided by the line speed), and 4) time required to average the gauge scans to determine a coating weight profile.

Over the course of many iterations, continuous improvements can be made to the discrete actuator settings such that the extrudate profile converges to, and closely matches, the Target Profile (block 407).

The workflow 400 can be repeated until controller 300 determines that the predicted set of settings cannot be improved and/or at periodic intervals to maintain a desired cross-web profile. A set of discrete settings can be saved as a recipe for future retrieval and use at a future time minutes, hours, or years later when similar materials, extrusion or coating properties, and processing conditions are required.

In some embodiments, the techniques described herein, including wavelet-base techniques, can be used in combination with other methods to control coating thickness. As an example, actuator adjustments made based on these techniques can provide an extrudate profile that is further optimized or refined using a cross-web heat distribution system as described in International Patent Nos. WO2006/130141 (Karg et al), WO2006/130142 (Karg et al), and WO2006/130143 (Karg et al). The wavelet scale and location of each transform can be tailored to the sensitivity and type of actuator being used, resulting in a more efficient control system.

The techniques described in this disclosure, such as techniques described with respect to controller 300, may be implemented, at least in part, in hardware, software, firmware or any combination thereof. For example, various examples of the techniques may be implemented within one or more microprocessors, digital signal processors (DSPs), application specific integrated circuits (ASICs), field programmable gate arrays (FPGAs), or any other equivalent integrated or discrete logic circuitry, as well as any combinations of such components, embodied in controllers, user interfaces or other devices. The term "controller" may generally refer to any of the foregoing logic circuitry, alone or in combination with other logic circuitry, or any other equivalent circuitry.

When implemented in software, the functionality ascribed to the systems and controllers described in this disclosure may be embodied as instructions on a computer-readable storage medium such as random access memory (RAM), read-only memory (ROM), non-volatile random access memory (NVRAM), electrically erasable programmable read-only memory (EEPROM), FLASH memory, magnetic media, optical media, or the like. The instructions may be executed to cause one or more processors to support one or more examples of the functionality described in this disclosure.

Various examples have been described in the foregoing passages. These and other examples are within the scope of the claims provided herein.

**Claims**

1. A method of adjusting a slot die (10) comprising:

    an applicator slot (6)

        extending along a width of the slot die, wherein the applicator slot
        is in fluid communication with a fluid flow path through the slot die,

    at least one of a group consisting of: a choker bar and flexible die lip, and
    a plurality of actuators (200) spaced along the width of the slot die, each actuator
    operatively coupled to the choker bar or flexible die lip to adjust a cross-sectional height of a fluid flow path at its respective location to provide a local adjustment of fluid flow through the applicator slot,
    wherein the method comprises:
    measuring thickness values of an extrudate provided from the applicator slot;
    mapping the thickness values to a corresponding position along the width of the slot die;
    **characterized in that** the method further comprises :
    executing a data compression of the extrudate thickness values to obtain a residual matrix representing the deviation of the measured thickness values from desired thickness values, the data compression either (i) comprising a flow sensitivity convolution accounting for effects of fluid flow though the slot die, or (ii) comprising a wavelet transform accounting for interactions between actuators transmitted through fluid flow; and
    adjusting the position of one or more of the plurality of actuators based on the residual matrix to obtain a corrected shape for the choker bar or flexible die lip.

2. The method of claim 1, wherein mapping the thickness values to a corresponding position along the width of the slot die comprises transforming the measured thickness values using an overlap matrix that represents a convolution of an actuator zone of influence with a measurement zone.

3. The method of claim 2, wherein the measured thickness values correspond to a stripe-coated extrudate comprised of a plurality of coated regions spaced apart each other along a cross-web direction.

4. The method of claim 1, wherein the wavelet transform comprises a Ricker wavelet transform.

5. The method of any one of claims 1-4, wherein adjusting the position of one or more of the plurality of actuators comprises:

    given the residual matrix, subtracting the effects of fluid flow through the slot die to obtain a zero-pressure slot height profile; and
    adjusting the position of one or more actuators toward the zero-pressure slot height profile.

6. The method of claim 5, wherein subtracting the effects of fluid flow through the slot die comprises creating a pressure die deflection model, using the pressure die deflection model to obtain a pressure-compensated slot height profile, and subtracting the measured or predicted amount of deflection from the pressure-compensated slot height profile to obtain the zero-pressure slot height profile.

7. The method of claim 6, further comprising measuring a die cavity pressure during operation of the slot die, wherein the pressure die deflection model considers the die cavity pressure.

8. The method of claim 5, wherein subtracting the effects of fluid flow through the slot die comprises empirically measuring an amount of deflection of the choker bar or flexible die lip induced by fluid flow within the die.

9. The method of any one of claims 1-8, wherein one or more actuators are adjusted according to a set of discrete settings based on a series of discrete settings corresponding to preselected slot height profiles for the extrudate.

10. The method of claim 9, wherein the set of discrete settings is determined from a stiffness matrix that transforms a height of the fluid flow path to an actuator position excluding the effects of deflection attributable to flow field physics effects.

11. The method of claim 10, wherein the stiffness matrix is a symmetric matrix, and wherein the stiffness matrix assumes that at least two actuators along the width of the slot die have identical flow sensitivity.

12. A process for making an extruded article, the process comprising:

adjusting a slot die according to the method of any one of claims 1-11; and
extruding through the applicator slot of the adjusted slot die an extrudate to obtain the extruded article.

13. A system comprising:

a slot die (10) including an applicator slot (6) extending along a width of the slot die, wherein the applicator slot is in fluid communication with a fluid flow path through the slot die,

at least one of a group consisting of: a choker bar and a flexible die lip, and
a plurality of actuators (200) spaced along the width of the slot die, each actuator

operatively coupled to the choker bar or flexible die lip to adjust a height of the fluid flow path at its respective location to provide a local adjustment of fluid flow
through the applicator slot;

and **characterized in that** it further comprises
a controller configured to receive thickness values of an extrudate provided from the applicator slot, map the thickness values to a corresponding position along the width of the slot die, execute a data compression of the extrudate thickness values to obtain a residual matrix representing the deviation of the measured thickness values from desired thickness values, the data compression either (i) comprising a flow sensitivity convolution accounting for effects of fluid flow though the slot die, or (ii) comprising a wavelet transform accounting for interactions between actuators transmitted through fluid flow; and adjust a position of one or more of the plurality of actuators based on the residual matrix to obtain a corrected shape for the choker bar or flexible die lip.

**Patentansprüche**

1. Ein Verfahren zum Anpassen einer Schlitzdüse (10), aufweisend:

einen Applikatorschlitz (6), der sich entlang einer Breite der Schlitzdüse erstreckt, wobei der Applikatorschlitz in Fluidverbindung mit einem Fluidströmungsweg durch die Schlitzdüse steht,
mindestens eines aus einer Gruppe, bestehend aus: einem Staubalken und einer flexiblen Düsenlippe, und
eine Mehrzahl von Aktuatoren (200), die entlang der Breite der Schlitzdüse beabstandet sind, wobei jeder Aktuator mit dem Staubalken oder der flexiblen Düsenlippe wirkgekoppelt ist, um eine Querschnittshöhe eines Fluidströmungswegs an ihrer jeweiligen Stelle anzupassen, um eine lokale Anpassung von Fluidströmung durch den Applikatorschlitz bereitzustellen,
wobei das Verfahren aufweist:

Messen von Dickenwerten eines Extrudats, das von dem Applikatorschlitz bereitgestellt wird;
Zuordnen der Dickenwerte zu einer korrespondierenden Position entlang der Breite der Schlitzdüse;
**dadurch gekennzeichnet, dass** das Verfahren ferner aufweist:

Ausführen einer Datenkomprimierung der Extrudatdickenwerte, um eine Restmatrix, die die Abweichung der gemessenen Dickenwerte von gewünschten Dickenwerten darstellt, zu erhalten, die Datenkomprimierung entweder (i) aufweisend eine Strömungsempfindlichkeitsfaltung, die Effekte von Fluidströmung durch die Schlitzdüse berücksichtigt, oder (ii) aufweisend eine Wavelet-Transformation, die Wechselwirkungen zwischen Aktuatoren, die durch Fluidströmung übertragen werden, berücksichtigt; und
Anpassen der Position eines oder mehrerer der Mehrzahl von Aktuatoren basierend auf der Restmatrix, um eine korrigierte Form für den Staubalken oder die flexible Düsenlippe zu erhalten.

2. Das Verfahren nach Anspruch 1, wobei das Zuordnen der Dickenwerte zu einer korrespondierenden Position entlang der Breite der Schlitzdüse ein Transformieren der gemessenen Dickenwerte unter Verwendung einer Überlappungsmatrix, die eine Faltung einer Aktuatoreinflusszone mit einer Messzone darstellt, aufweist.

3. Das Verfahren nach Anspruch 2, wobei die gemessenen Dickenwerte mit einem streifenbeschichteten Extrudat, aufweisend eine Mehrzahl von beschichteten Bereichen, die entlang einer Querbahnrichtung voneinander beabstandet sind, korrespondieren.

4. Das Verfahren nach Anspruch 1, wobei die Wavelet-Transformation eine Ricker-Wavelet-Transformation aufweist.

5. Das Verfahren nach einem der Ansprüche 1 bis 4, wobei das Anpassen der Position eines oder mehrerer der Mehrzahl von Aktuatoren aufweist:

Ausgehend von der Restmatrix: Subtrahieren der Effekte von Fluidströmung durch die Schlitzdüse, um ein Nulldruck-Schlitzhöhenprofil zu erhalten; und
Anpassen der Position eines oder mehrerer Aktuatoren zu dem Nulldruck-Schlitzhöhenprofil.

6. Das Verfahren nach Anspruch 5, wobei das Subtrahieren der Effekte von Fluidströmung durch die Schlitzdüse ein Erstellen eines Druckdüsen-Auslenkungsmodells, ein Verwenden des Druckdüsen-Auslenkungsmodells, um ein druckkompensiertes Schlitzhöhenprofil zu erhalten, und das Subtrahieren des gemessenen oder vorhergesagten Betrags von Auslenkung von dem druckkompensierten Schlitzhöhenprofil, um das Nulldruck-Schlitzhöhenprofil zu erhalten, aufweist.

7. Das Verfahren nach Anspruch 6, ferner aufweisend das Messen eines Düsenhohlraumdrucks während eines Betriebs der Schlitzdüse, wobei das Druckdüsen-Auslenkungsmodell den Düsenhohlraumdruck einbezieht.

8. Das Verfahren nach Anspruch 5, wobei das Subtrahieren der Effekte von Fluidströmung durch die Schlitzdüse das empirische Messen eines Betrags von Auslenkung des Staubalkens oder der flexiblen Düsenlippe, die durch Fluidströmung innerhalb der Düse induziert wird, aufweist.

9. Das Verfahren nach einem der Ansprüche 1 bis 8, wobei ein oder mehrere Aktuatoren gemäß einem Satz diskreter Einstellungen basierend auf einer Reihe diskreter Einstellungen, die mit vorab ausgewählten Schlitzhöhenprofilen für das Extrudat korrespondieren, angepasst werden.

10. Das Verfahren nach Anspruch 9, wobei der Satz diskreter Einstellungen aus einer Steifigkeitsmatrix, die eine Höhe des Fluidströmungswegs zu einer Aktuatorposition transformiert, bestimmt wird, wobei die Effekte von Auslenkung, die auf physikalische Strömungsfeldeffekte zurückzuführen sind, ausgeschlossen werden.

11. Das Verfahren nach Anspruch 10, wobei die Steifigkeitsmatrix eine symmetrische Matrix ist, und wobei die Steifigkeitsmatrix annimmt, dass mindestens zwei Aktuatoren entlang der Breite der Schlitzdüse über identische Strömungsempfindlichkeit verfügen.

**12.** Ein Prozess zum Herstellen eines extrudierten Gegenstands, der Prozess aufweisend:

Anpassen einer Schlitzdüse nach dem Verfahren einer der Ansprüche 1 bis 11; und
Extrudieren durch den Applikatorschlitz der angepassten Schlitzdüse eines Extrudats, um den extrudierten Gegenstand zu erhalten.

**13.** Ein System, aufweisend:

eine Schlitzdüse (10), einschließend
einen Applikatorschlitz (6), der sich entlang einer Breite der Schlitzdüse erstreckt, wobei der Applikatorschlitz in Fluidverbindung mit einem Fluidströmungsweg durch die Schlitzdüse steht,
mindestens eines aus einer Gruppe, bestehend aus: einem Staubalken und einer flexiblen Düsenlippe, und
eine Mehrzahl von Aktuatoren (200), die entlang der Breite der Schlitzdüse beabstandet sind, wobei jeder Aktuator mit dem Staubalken oder der flexiblen Düsenlippe wirkgekoppelt ist, um eine Höhe des Fluidströmungswegs an ihrer jeweiligen Stelle anzupassen, um eine lokale Anpassung von Fluidströmung durch den Applikatorschlitz bereitzustellen;
und **dadurch gekennzeichnet, dass** es ferner aufweist
eine Steuervorrichtung, die konfiguriert ist, um Dickenwerte eines Extrudats, das von dem Applikatorschlitz bereitgestellt wird, zu empfangen, die Dickenwerte zu einer korrespondierenden Position entlang der Breite der Schlitzdüse zuzuordnen, eine Datenkomprimierung der Extrudatdickenwerte auszuführen, um eine Restmatrix, die die Abweichung der gemessenen Dickenwerte von gewünschten Dickenwerten darstellt, zu erhalten, die Datenkomprimierung entweder (i) aufweisend eine Strömungsempfindlichkeitsfaltung, die Effekte von Fluidströmung durch die Schlitzdüse berücksichtigt, oder (ii) aufweisend eine Wavelet-Transformation, die Wechselwirkungen zwischen Aktuatoren, die durch Fluidströmung übertragen werden, berücksichtigt; und eine Position eines oder mehrerer der Mehrzahl von Aktuatoren basierend auf der Restmatrix anzupassen, um eine korrigierte Form für den Staubalken oder die flexible Düsenlippe zu erhalten.

**Revendications**

**1.** Procédé de réglage d'une filière à fente (10) comprenant :

une fente d'application (6) s'étendant le long d'une largeur de la filière à fente, dans lequel la fente d'application est en communication fluidique avec un trajet d'écoulement de fluide à travers la filière à fente,
au moins l'une d'un groupe constitué par : une barre d'étranglement et une lèvre de filière flexible, et
une pluralité d'actionneurs (200) espacés le long de la largeur de la filière à fente, chaque actionneur étant couplé de manière opérationnelle à la barre d'étranglement ou à la lèvre de filière flexible afin de régler une hauteur en coupe transversale d'un trajet d'écoulement de fluide à son emplacement respectif afin de fournir un réglage local d'écoulement de fluide à travers la fente d'application,
dans lequel le procédé comprend :

la mesure de valeurs d'épaisseur d'un extrudat provenant de la fente d'application ;
la mise en correspondance des valeurs d'épaisseur avec une position correspondante le long de la largeur de la filière à fente ;
**caractérisé en ce que** le procédé comprend en outre :

l'exécution d'une compression de données des valeurs d'épaisseur d'extrudat afin d'obtenir une matrice résiduelle représentant l'écart des valeurs d'épaisseur mesurées par rapport à des valeurs d'épaisseur souhaitées, la compression de données soit (i) comprenant une convolution de sensibilité à l'écoulement tenant compte d'effets d'écoulement de fluide à travers la filière à fente, soit (ii) comprenant une transformée en ondelettes tenant compte d'interactions entre actionneurs transmises à travers l'écoulement de fluide ; et
le réglage de la position d'un ou de plusieurs de la pluralité d'actionneurs en fonction de la matrice résiduelle afin d'obtenir une forme corrigée pour la barre d'étranglement ou la lèvre de filière flexible.

**2.** Procédé selon la revendication 1, dans lequel la mise en correspondance des valeurs d'épaisseur avec une position correspondante le long de la largeur de la filière à fente comprend la transformation des valeurs d'épaisseur mesurées à l'aide d'une matrice de chevauchement qui représente une convolution d'une zone d'influence d'actionneurs avec une zone de mesure.

3. Procédé selon la revendication 2, dans lequel les valeurs d'épaisseur mesurées correspondent à un extrudat revêtu de bandes constitué d'une pluralité de régions revêtues espacées les unes des autres le long d'une direction transversale à la nappe.

4. Procédé selon la revendication 1, dans lequel la transformée en ondelettes comprend une transformée en ondelettes de Ricker.

5. Procédé selon l'une quelconque des revendications 1 à 4, dans lequel le réglage de la position d'un ou plusieurs de la pluralité d'actionneurs comprend :

compte tenu de la matrice résiduelle, la soustraction des effets de l'écoulement de fluide à travers la filière à fente pour obtenir un profil de hauteur de fente à pression nulle ; et
le réglage de la position d'un ou de plusieurs actionneurs en vue d'atteindre le profil de hauteur de fente à pression nulle.

6. Procédé selon la revendication 5, dans lequel la soustraction des effets de l'écoulement de fluide à travers la filière à fente comprend la création d'un modèle de déflexion de filière sous pression, l'utilisation du modèle de déflexion de filière sous pression pour obtenir un profil de hauteur de fente à compensation de pression, et la soustraction de la quantité de déflexion mesurée ou prédite du profil de hauteur de fente à compensation de pression pour obtenir le profil de hauteur de fente à pression nulle.

7. Procédé selon la revendication 6, comprenant en outre la mesure d'une pression dans une cavité de filière pendant le fonctionnement de la filière à fente, dans lequel le modèle de déflexion de filière sous pression prend en compte la pression de cavité de filière.

8. Procédé selon la revendication 5, dans lequel la soustraction des effets d'écoulement de fluide à travers la filière à fente comprend la mesure empirique d'une quantité de déflexion de la barre d'étranglement ou de la lèvre de filière flexible induite par l'écoulement de fluide à l'intérieur de la filière.

9. Procédé selon l'une quelconque des revendications 1 à 8, dans lequel un ou plusieurs actionneurs sont réglés selon un ensemble de paramètres discrets en fonction d'une série de paramètres discrets correspondant à des profils de hauteur de fente présélectionnés pour l'extrudat.

10. Procédé selon la revendication 9, dans lequel l'ensemble de réglages discrets est déterminé à partir d'une matrice de rigidité qui transforme une hauteur du trajet d'écoulement de fluide en une position d'actionneur en excluant les effets de la déflexion attribuable à des effets de la physique des champs d'écoulement.

11. Procédé selon la revendication 10, dans lequel la matrice de rigidité est une matrice symétrique, et dans lequel la matrice de rigidité suppose qu'au moins deux actionneurs le long de la largeur de la filière à fente ont une sensibilité identique à l'écoulement.

12. Procédé de fabrication d'un article extrudé, le procédé comprenant :

le réglage d'une filière à fente suivant le procédé selon l'une quelconque des revendications 1 à 11 ; et l'extrusion à travers la fente d'application de la filière à fente réglée d'un extrudat afin d'obtenir l'article extrudé.

13. Système comprenant :

une filière à fente (10) comportant
une fente d'application (6) s'étendant le long d'une largeur de la filière à fente, dans lequel la fente d'application est en communication fluidique avec un trajet d'écoulement de fluide à travers la filière à fente,
au moins l'une d'un groupe constitué par : une barre d'étranglement et une lèvre de filière flexible, et
une pluralité d'actionneurs (200) espacés le long de la largeur de la filière à fente, chaque actionneur étant couplé de manière opérationnelle à la barre d'étranglement ou à la lèvre de filière flexible pour ajuster une hauteur d'un trajet d'écoulement de fluide à son emplacement respectif afin de fournir un réglage local d'écoulement de fluide à travers la fente d'application ;

et **caractérisé en ce qu'**il comprend en outre :

un module de commande configuré pour recevoir des valeurs d'épaisseur d'un extrudat provenant de la fente d'application, faire correspondre les valeurs d'épaisseur à une position correspondante le long de la largeur de la filière à fente, l'exécution d'une compression de données des valeurs d'épaisseur d'extrudat afin d'obtenir une matrice résiduelle représentant l'écart des valeurs d'épaisseur mesurées par rapport à des valeurs d'épaisseur souhaitées, la compression de données soit (i) comprenant une convolution de sensibilité à l'écoulement tenant compte d'effets d'écoulement de fluide à travers la filière à fente, soit (ii) comprenant une transformée en ondelettes tenant compte d'interactions entre actionneurs transmises par l'écoulement de fluide ; et le réglage d'une position d'un ou de plusieurs de la pluralité d'actionneurs en fonction de la matrice résiduelle afin d'obtenir une forme corrigée pour la barre d'étranglement ou la lèvre de filière flexible.

*FIG. 1*

*FIG. 2*

*FIG. 3*

400

402 — Profile Measurement

404 — Web-to-Die Mapping

406 — Data Compression

407 — Target Profile

409 — Current Slot Height

408 — Profile Deviation

410 — Slot Height Adjustment

412 — Actuator Adjustment

*FIG. 4*

*FIG. 5*

*FIG. 6*

*FIG. 7*

*FIG. 7A*

*FIG. 7B*

*FIG. 7C*

FIG. 8

FIG. 9

33

FIG. 10

FIG. 11

*FIG. 12*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1987942 A2
- EP 2718086 A1
- US 9044894 B, Loukusa
- US 9216535 B, Trice
- US 9579684 B, Yapel
- US 9744708 B, Loukusa
- US 9700911 B, Nakano
- WO 2019219724 A, Colell
- WO 2012170713 A, Secor
- WO 2006130141 A, Karg
- WO 2006130142 A, Karg
- WO 2006130143 A, Karg

**Non-patent literature cited in the description**

- **RICHARD L. BURDEN et al.** *Numerical Analysis*, 1981, 131-133